# EUROPEAN PATENT APPLICATION

(11) **EP 1 455 252 A2**
(43) Date of publication of application: **08.09.2004**
(21) Application number: 04251236.8
(22) Date of filing: 03.03.2004
(51) Int. Cl.: G05B 19/4093

(54) **Processing program creation apparatus**

(30) Priority: 07.03.2003 JP 2003061500
(71) Applicant: FANUC LTD, Minamitsuru-gun, Yamanashi 401-0597 (JP)
(72) Inventor: Shinozaki, Satoru, Shimodate-shi Ibaraki 308-0811 (JP); Samukawa, Koji, Minamitsuru-gun Yamanashi 401-0511 (JP)
(74) Representative: Billington, Lawrence Emlyn

(57) **Abstract**

A plurality of fixed form programs (1,2) used to create a processing program are stored as a fixed form program file (A1). The fixed form programs (1,2) include undefined data portions (T?) respectively. One fixed form program (1) is selected, and data is key-inputted to the undefined data portion (T?) included in the fixed form program (1). Consequently, the processing program using the fixed form program (1) to be used for a numerical control device can be created.

## Description

### BACKGROUND OF THE INVENTION

### Field of the Invention

The present invention relates to a processing program creation apparatus for creating a processing program for controlling a machine tool with a numerical control device and processing a work.

### Description of the Related Art

A numerical control device incorporating an interactive programming input function can interactively create a processing program while referring to various data files and displaying various interactive data on a display unit. There is a known processing program creation apparatus wherein, in creating the interactive processing program, it automatically calculates and sets up an optimum number of revolutions and feed rate of a tool according to a cutting direction of the tool (Japanese Patent Application Laid-Open No. 10-161725).

According to this method, an interactive type data inputting screen for creation of an NC statements is provided, and processing conditions such as the feed rate and cutting speed are automatically determined by inputting the data to a predetermined position thereon or moving a cursor to the predetermined position and pushing a help key.

In the case of the above-mentioned related art, the data on the processing conditions such as the feed rate and spindle rotational speed inputted to the input screen is not ISO code data used for an ordinary numerical control device. Therefore, it is necessary to once store the data inputted or automatically determined by using the input screen in a storage device and execute a program for interpreting the stored data and converting it to an ISO code form. It requires a data storage area for storing the inputted data, and a special program for interpreting the stored data needs to be prepared.

### SUMMARY OF THE INVENTION

Aprocessing program creation apparatus according to the present invention creates a processing program used for a numerical control device.

A first aspect of the processing program creation apparatus according to the present invention comprises fixed form program storage means for storing a plurality of fixed form programs including an undefined data portion and used to create theprocessingprogram, selectionmeans for selecting one fixed form program from the fixed form program storage means, and input means for inputting data to the undefined data portion included in the fixed form program selected by the selection means. And data is inputted to the undefined data portion in the fixed form program by means of the input means so as to create the processing program by using the fixed form program.

A second aspect of the processing program creation apparatus according to the present invention comprises fixed form program storage means for storing a plurality of fixed form programs including the undefined data portion and used to create the processing program, program data storage means for storing program data used for the fixed form programs, selection means for selecting one fixed form program from the fixed formprogram storage means, and input means for inputting the data to the undefined data portion included in the fixed form program selected by the selection means. And the program data stored in the program data storage means is read based on the data inputted to the undefined data portion included in the fixed form program by means of the input means and is replaced in another undefined data portion in the fixed form program so as to create the processing program.

A third aspect of the processing program creation apparatus according to the present invention comprises fixed form program storage means for storing a plurality of fixed form programs including the undefined data portion and used to create the processing program, formula storage means for storing a formula for determining the program data used for the fixed form programs, the selection means for selecting one fixed form program from the fixed form program storage means, and the input means for inputting the data to the undefined data portion included in the fixed form program selected by the selection means. And the program data is determined with the formula storedby the formula storage means by using the data inputted to the undefined data portion included in the fixed form program by means of the input means, and is replaced in another undefined data portion in a fixed form program so as to create the processing program.

In the processing program creation apparatus according to the first to third aspects, symbols may be provided within the fixed form program in order to identify the undefined data portion included in the fixed form program as the data to be inputted.

As the present invention is constituted as above, it is possible, without requiring a data storage area and a special program for interpreting an inputted data, to provide the processing program creation apparatus capable of interactively inputting the processing program in the form of ISO code.

### BRIEF DESCRIPTION OF THE DRAWINGS

The above described and other obj ects and characteristics of the present invention will be clarified by the following descriptions of the embodiments by referring to the attached drawings, wherein:
FIG. 1 is a block diagram of a numerical control device incorporating an interactive input function as an example of a processing program creation apparatus according to the present invention;
FIGS. 2 and 3 are flowcharts showing a first example of work for creating a processing program according to the present invention;
FIGS. 4 and 5 are flowcharts showing a second example of the work for creating the processing program according to the present invention;
FIG. 6 is a diagram for describing a fixed form program file used in the first example of the work for creating the processing program;
FIG. 7 is a diagram for describing the fixed form program file used in the second example of the work for creating the processing program;
FIG. 8 is a diagram for describing a processing condition file used in the second example of the work for creating the processing program;
FIG. 9 is a diagram for describing a data processing file used in the second example of the work for creating the processing program; and
FIG. 10 is a diagram for describing a processing program file used in the second example of the work for creating the processing program.

### DESCRIPTION OF THE EMBODIMENTS

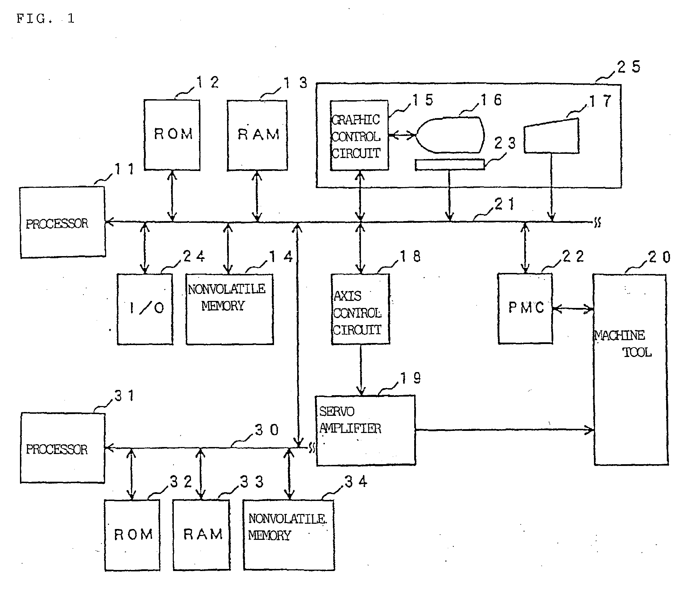

FIG. 1 is a block diagram of an example of a numerical control device incorporating an interactive input function as a processing program creation apparatus as an embodiment of the present invention.

A processor 11 controls the entire numerical control device according to a system program stored in an ROM 12. An EPROM or an EEPROM is used for the ROM 12, and the system program to be executed by the processor 11 is stored therein. An SRAM or the like is used for an RAM 13 in which various data or input/output signals are stored. A CMOS backed up by a battery (not shown) is used for a nonvolatile memory 14, where the various data once stored is held as it is even after turning off the power and a processing program and so on are stored.

A graphic control circuit 15 converts a digital signal into a signal for display, and gives it to a display unit 16. A CRT or a liquid crystal display is used as a graphic display of the display unit 16. When interactively creating the processing program, the display unit 16 displays the data on a creation processing program and various files set up and stored in advance.

A keyboard 17 is used to provide various instructions and data inputs of a numeric key, a cursor key, a selection key and so on.

An axis control circuit 18 receives an instruction to move an axis from a processor 11 and outputs the instruction to a servo amplifier 19. The servo amplifier 19 receives the instruction and drives a servo motor of a machine tool 20. These components are mutually connected by a bus 21.

A PMC (Programmable Machine Controller) 22 receives a T function signal (tool selection instruction) and so on via the bus 21 when executing an NC program. And it processes this signal with a sequence program and outputs the signal as an operational instruction so as to control the machine tool 20. And it receives a status signal from the machine tool 20 and performs a sequence process, and then transfers a necessary input signal to the processor 11 via the bus 21.

Furthermore, the bus 21 is connected with a serial interface 24 for sending a software key 23 and a processing program of which instructed item (function) changes according to the system program and so on to external devices such as a storage medium, a printer or a paper tape reader. The software key 23 is provided to a CRT/MDI panel 25 together with the display unit 16 and keyboard 17.

The bus 21 is connected with a processor for interaction 31 having a bus 30, separate from the processor 11 which is a CPU for NC. The bus 30 is connected with a nonvolatile memory 34 composed of an ROM 32, an RAM 33, the EEPROM and so on.

Various data files to be referred to for the sake of interactively creating the processing program are stored in the nonvolatile memory 34. The display unit 16 displays the necessary data from the files in a menu form on creating the processing program. A selection of an item of the menu is made by the software key 23 and so on placed in the lower part of the screen correspondingly to the menu. The created processing program is stored in the nonvolatile memory 14.

The above-mentioned configuration of the numerical control device incorporating an interactive program input function is not different from those in the past. According to this embodiment, the nonvolatile memory 34 has a fixed form program file A1 or B1 including the undefined portion for extracting in advance a portion specifying tools and cutting conditions (number of spindle revolutions, feed rate and so on) from the processing program in the form of ISO code and storing it to be selectable in the menu form, a processing condition file B2 for storing a processing condition for each tool, and additionally a data processing file B3 for acquiring the number of spindle revolutions and feed rate by using a formulaandsoonprovidedtherein. Andtheprocessingprogram is created by using these files provided in the nonvolatile memory 34.

Tool instruction statements in the fixed form program files A1 and B1 include the data "T?'' (undefined data) which is undefined as to the tool. Furthermore, the tool instruction statements in the fixed form program file B1 include the undefined data "S?" on the number of spindle revolutions, undefined data "F?" on the feed rate and so on in addition to the undefined data "T?" on the tool. An operator indicates such a marked portion of the undefined data with the cursor and inputs the data directly with the numeric key so as to create the processing program in the form of ISO code while automatically determining the cutting condition and so on.

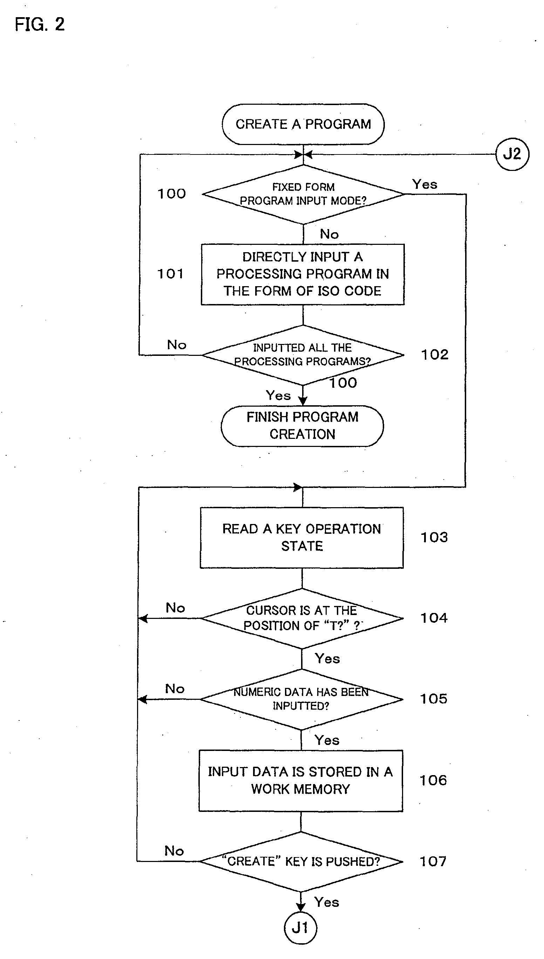

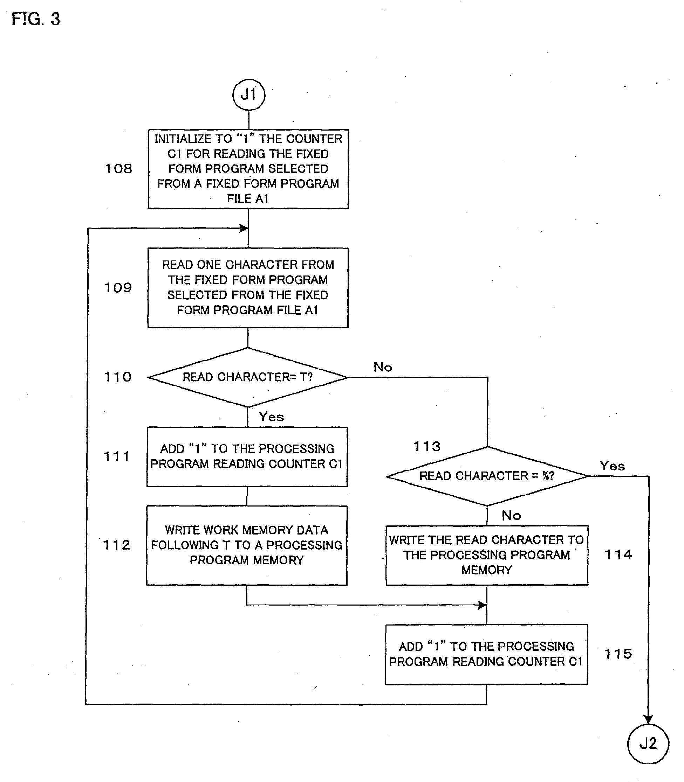

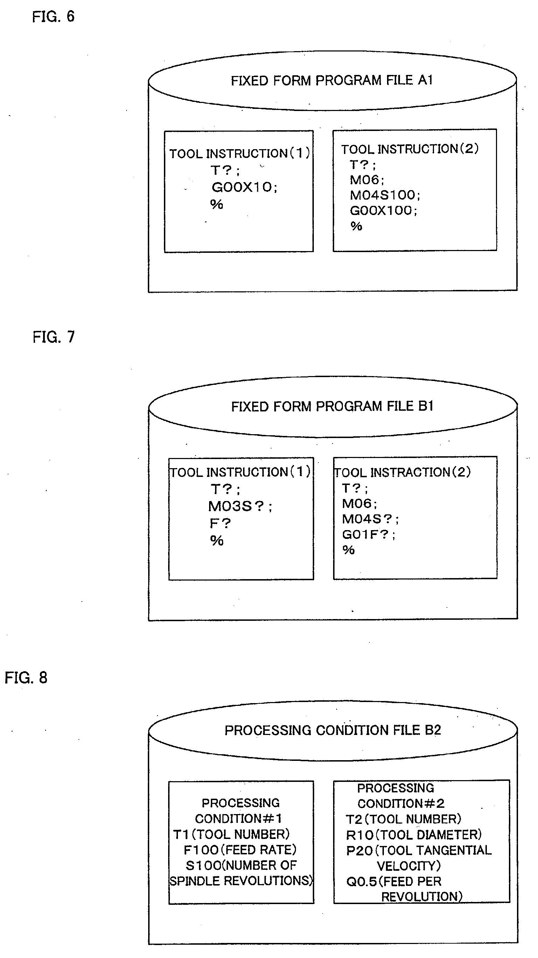

FIGS. 2 and 3 are flowcharts showing a first example of the work for creating the processing program according to the present invention. In this example, as shown in FIG. 6, a plurality of tool instruction fixed form programs are preset as the fixed form program file A1 in the nonvolatile memory 34 by giving them tool instruction numbers beginning with number 1 and increasing one by one such as a tool instruction (1), a tool instruction (2) and so on. The operator inputs the tool instruction number to select the tool instruction fixed form program of that tool instruction number. The tool instruction (1), tool instruction (2) and so on included in the fixed form program file A1 have undefined data portions on the tool described as "T?"

First, creation of the processing program is started in a processing program creation mode. Then, the processor 31 determines whether or not a fixed form program input mode is selected by using the software key 23 (step 100). If the data is inputted without selecting the fixed form program input mode, the data is written to a processing program memory provided to the nonvolatile memory 34 as the data on the processing program in the form of ISO code (step 101). And the processing in steps 100 to 102 is repeated until the input of all the processing programs is finished.

If the fixed form program input mode is selected, a menu of the tool instructions to be stored in the fixed form program file A1 is displayed on the screen of the display unit 16. If one of apluralityof displayed tool instructions is selected by the operator, the fixed form program for the selected tool instruction is displayed on the screen of the display unit 16 (step 100). And a key operation state is read (step 103) so as to determine whether or not the cursor is at the position of "T?" in the selected tool instruction (step 104). If the cursor is not at the position of "T?," processing returns to step 103. If the cursor is at the position of "T?," the processor 31 determines whether or not numeric data has been inputted (step 105). And the processing in steps 103 to 105 is repeated until there is the numeric input by the operator.

If the operator inputs a tool number, input data is stored in a work memory provided in the RAM 33 (step 106). Next, the processor 31 determines whether or not a "Create" key of the software keys is pushed (step 107). The processing in steps 103 to 107 is repeated until the "Create" key is pushed. And if the "Create" key is pushed, the processor 31 initializes to "1" a processing program reading counter C1 for reading the selected tool instruction (fixed form program) character by character (step 108), and reads one character of the fixed form program for tool instruction, indicated by the processing program counter C1, from the fixed form program file A1 (step 109).

If the read character is "T" ("T" is read first as shown in FIG. 6) (step 110), "1" is added to the processing program reading counter C1 (step 111), and the read character T and the data indicating the tool number stored in the work memory in advance are successively written to the processing program in the form of ISO code stored in the processing program memory (step 112). And "1" is added to the processing program reading counter C1 (step 115), and processing returns to step 109.

Next, the processor 31 reads a next character in the selected fixed form program for tool instruction from the fixed form program file A1. If the read character is not "T," processing proceeds from step 110 to step 113, and the processor 31 determines whether or not the read character is "%" signifying absolute rewind stop and reset (step 113). If the read character is not "%," the read character is written to the processing program in the form of ISO code in the processing program memory (step 114). And "1" is added to the processing program reading counter C1 (step 115), and processing returns to step 109. Hereafter, the processing in steps 109 to 115 is repeatedly performed until the character "%" is read.

If the character "%" is read, processing returns to step 100 and repeatedly performs the aforementioned processing. Thus, it is possible to select the fixed form program and input the tool data in the middle of the processing program creation in the form of ISO code so as to automatically program the preset number of spindle revolutions and so on in the form of ISO code with the fixed form program.

In the above-mentioned first example of the processing program creation, the number of spindle revolutions and the feed rate are already set up in the fixed form program for tool instruction stored in the fixed form program file A1. Therefore, it is possible to automatically create the processing program in the form of ISO code by selecting the tool instruction (fixed form program) from the fixed form program file A1 and inputting the tool number.

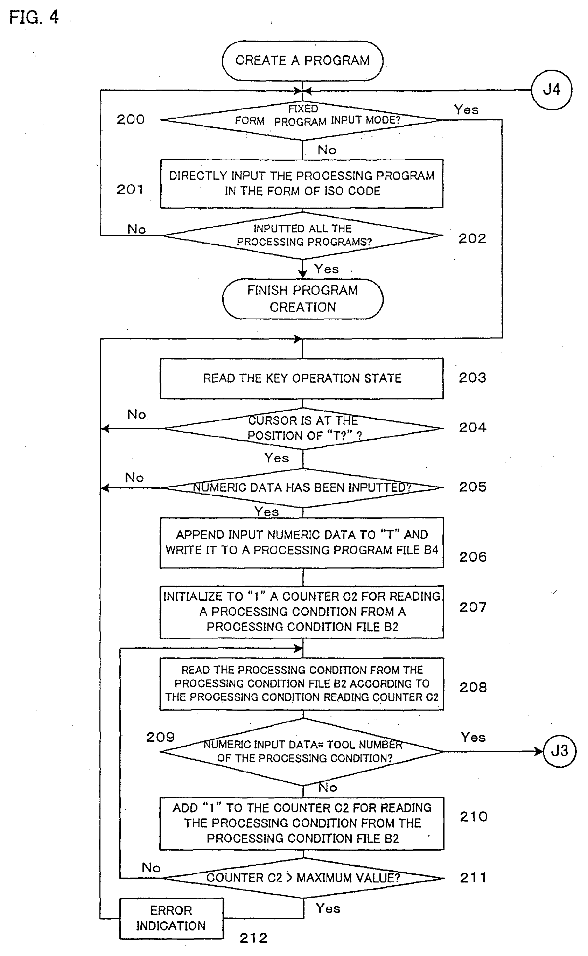

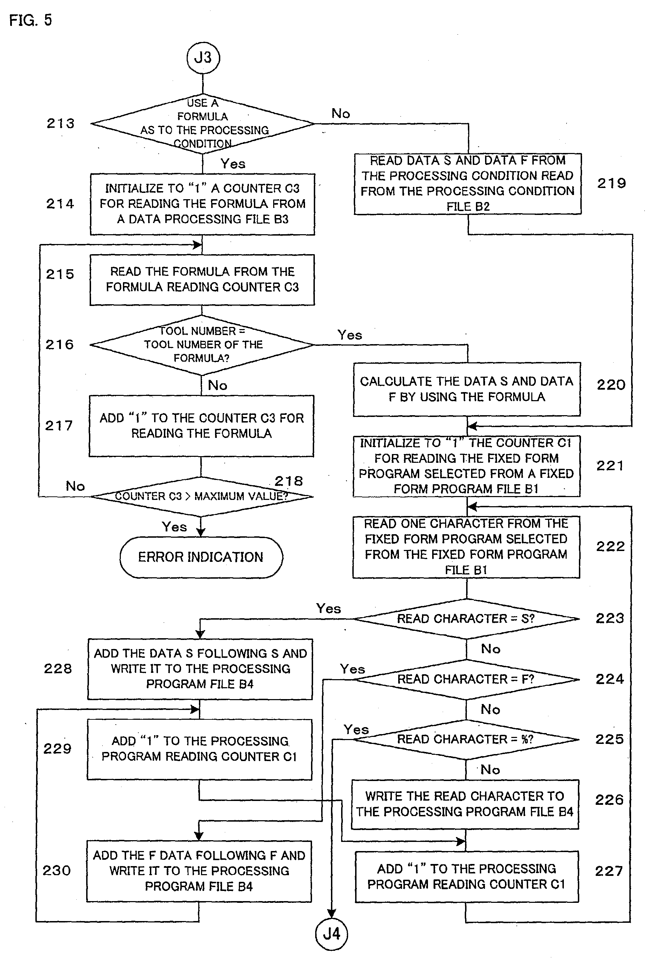

Next, a second example of the work for creating the processing program will be described by using the flowcharts shown in FIGS. 4 and 5. In the second example, the tool instruction is comprised of the fixed form program in which the tool and processing condition are the undefined data portion (undetermined data portion). And the data for determining the processing condition is selected from a file, separate from the fixed form program file, so as to create the program in the form of ISO code.

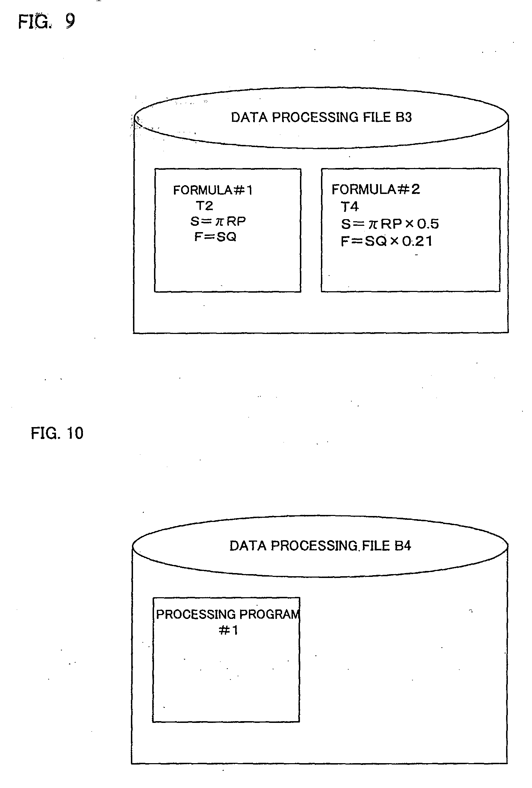

The second example uses the fixed form program file B1 (FIG. 7) , the processing condition file B2 (FIG. 8) for storing undefined processing condition data in each tool instruction fixed form program included in the fixed form program file B1, and the data processing file B3 (FIG. 9) storing the formula for determining the program data. Furthermore, as shown in FIG. 10, the second example has a processing program file B4 for storing created processing programs. The fixed form program for tool instruction in the fixed form program file B1 further includes the undefined data "S?" on the number of spindle revolutions, undefined data "F?" on the feed rate and so on in addition to the undefined data "T?" on the tool.

As shown in FIG. 8, the processing condition file B2 has the respective processing conditions stored therein by giving them processing condition numbers beginning with number 1 and increasing one by one such as a processing condition #1, a processing condition #2 and so on. There are two types of such processing conditions. One of them is the type wherein the program data is stored with the tool number T, feed rate F and number of spindle revolutions S as a set as shown by the processing condition #1 in FIG. 8, and the other is the type wherein the data on a tool diameter R, a tool tangential velocity P and a feed per revolution Q necessary to acquire the feed rate F and the number of spindle revolutions S by using a formula is stored as a set as shown by the processing condition #2 in FIG. 8. In the example in FIG. 8, the tool number T is "1," the feed rate F is "100," and the number of spindle revolutions S is "100" in the case of the processing condition #1, and the tool number T is "2," the tool diameter R is "10," the tool tangential velocity P is "20," and the feed per revolution Q is "0.5" in the case of the processing condition #2.

The data processing file B3 stores the formulas for acquiring the program data on the number of spindle revolutions S and the feed rate F in the processing condition file B2 in association with the tool numbers. In this case, the respective formulas are also stored by giving them formula numbers beginning with number 1 and increasing one by one such as a formula #1, a formula #2 and so on.

In this second embodiment, processing at steps 200 to 205 are the same as processing at steps 100 to 105 in the first embodiment. To be more specific, if the processing program creation is started in the processing program creation mode, the processor 31 determines whether or not the fixed form program input mode is selected (step 200). If the data is inputted without selecting the fixed form program input mode, the data is written to the processing program in the processing program file B4 as the processing program in the form of ISO code (step 201). And the processing in steps 200 to 202 is repeated until the input of all the processing programs is finished.

If the fixed form program input mode is selected, the menu of the tool instructions to be stored in the fixed form program file B1 shown in FIG. 7 is displayed on the screen of the display unit 16. One of the tool instructions is selected, and the fixed form program for the selected tool instruction is displayed on the screen of the display unit 16 (step 200). And the key operation state is read (step 203) so as to determine whether or not the cursor is at the position of "T?" in the selected tool instruction (step 204). If the cursor is not at the position of "T?," processing returns to step 203. If the cursor is at the position of "T?," the processor 31 determines whether or not the numeric data on the tool number has been inputted (step 205). And the processing in steps 203 to 205 is repeated until there is the numeric input.

If the operator inputs the tool number, the inputted tool number is appended to "T" and is written to the processing program in the processing program file B4 (step 206). And the processor 31 initializes to "1" a counter C2 for reading the processing condition from the write processing condition fileB2 (step 207). Then, the processor 31 reads the processing condition number corresponding to a value of the counter C2 from the write processing condition file B2 (step 208), and determines whether or not the tool number set to the processing condition of the read number coincides with the tool number written in step 206 (step 209). If they do not coincide, the processor 31 adds "1" to the counter C2 for reading the processing_condition (step 210), and determines whether or not the value of the counter C2 has exceeded a maximum number of the processing condition numbers (step 211). If not exceeded, processing returns to step 208. And processing proceeds to step 213 if the tool number of the read processing condition coincides with the inputted tool number. In the case where the processor 31 determines that the value of the counter C2 has exceeded the maximum number of the processing condition numbers, it is determined that some malfunction such as an input error of the tool number data has occurred, and an error indication is performed on the screen of the display unit 16 (step 212) so as to return to step 203 and perform the processing at step 203 and subsequent steps.

If the tool number of the processing condition coincides with the inputted tool number, the processor 31 determines whether or not the condition stored in association with the processing condition number at the time is given by a formula (step 213). If the condition is given by a feed rate F and number of spindle revolutions S, not by a formula, the processing proceeds to step 219 so as to read and store the data on the number of spindle revolutions S and the feed rate F from the processing condition corresponding to the processing condition number.

The processor 31 initializes to "1" theprocessingprogram reading counter C1 for reading a currently selected fixed form program for tool instruction from the fixed form program file B1 character by character (step 221), and reads one character from the selected fixed form program for tool instruction, included in the fixed form program file B1, in the order of values indicated by the counter C1 (step 222). And the processor 31 determines whether the read character is "S," "F" or "%," (steps 223, 224 and 225). If the read character is not "S," "F" or "%," the read character is written to the processing program under creation in the processing program file B4 (step 226). And "1" is added to the processing program reading counter C1 (step 227), and it returns to step 222.

For instance, if the tool instruction (1) is selected in the example shown in FIG. 7, "M," "0" and "3" are read in order, and they are written to the processing program under creation in the processing program file B4 in this order.

And if the code "S" of the number of spindle revolutions is read (step 223) , the S data read in step 219 is added following the "S" and is written to the processing program under creation in the processing program file B4 (step 228). Next, "1" is added to the processing program reading counter C1 (step 229) , andprocessingproceeds to step 227 where "1" is further added. Thus, the processor 31 skips "?" set following "S" and designates the next character to be read. To describe it in the example of the tool instruction (1) in FIG. 7, 1 + 1 = 2 is added to the processing program reading counter C1 so that "?" following "S" is skipped and the character "F" is read.

And when the character "F" is read (step 224), the data F read in step 219 is added following the "F" and is written to the processing program under creation in the processing program file B4 (step 230). Next, "1" is added to the processing program reading counter C1 (step 229), and processing proceeds to step 227 where "1" is further added and return to step 222.

If "%" is read (step 225), processing returns to step 200.

If the processor 31 determines that the processing condition is given by the formula in step 213, it initializes to "1" the counter C3 for reading the formula from the data processing file B3 (step 214), and reads the formula data corresponding to the value of the counter C3 for reading the formula (step 215). The processor 31 determines whether or not the tool number stored in the formula data coincides with the tool number set and stored in step 206 (step 216). If they do not coincide with each other, the processor 31 adds "1" to the counter C3 for reading the formula (step 217), and determines whether or not the counter C3 has exceeded a maximum value of the formula numbers (step 218). If not exceeded, processing returns to step 215 and the aforementioned processing in step 215 and subsequent steps are executed. In the case where the counter C3 has exceeded the maximum value of the formula numbers, an error indication is carried out.

If the tool number stored in the formula data coincides with the tool number set and stored in step 206, processing proceeds to step 220 and the processor 31 calculates the number of spindle revolutions S and the feed rate Fbyusing the formulas stored in the formula data and based on the values of parameters of the formulas read from the processing condition file in step 208. And processing proceeds to step 211 and the aforementioned processing in step 211 and subsequent steps are executed.

It is possible, as described above, to directly input processing conditions such as feed rate and number of spindle revolutions in an interactive mode, as well as processing program in the form of ISO code.

As described above, according to the present invention, it is possible to interactively create a processing program using an ISO code form, by directly inputting the processing conditions such as the feed rate and the number of spindle revolutions in the form of ISO code so as to easily create the processing program.

## Claims

1. An apparatus for creating a processing program used for a numerical control device, comprising:
fixed form program storage means for storing a plurality of fixed form programs including an undefined data portion and used to create said processing program;
selection means for selecting one fixed form program from said fixed form program storage means; and
input means for inputting data to the undefined data portion included in the fixed form program selected by said selection means, wherein
the data is inputted to the undefined data portion in said fixed form program by means of said input means so as to create the processing program by using the fixed form program.

2. An apparatus for creating a processing program used for a numerical control device, comprising:
fixed form program storage means for storing a plurality of fixed form programs including an undefined data portion and used to create said processing program;
program data storage means for storing program data used in said fixed form programs;
selection means for selecting one fixed form program from said fixed form program storage means; and
input means for inputting data to the undefined data portion included in the fixed form program selected by said selection means, wherein
the program data stored in said program data storage means is read based on the data inputted to the undefined data portion included in said fixed form program by means of said input means and is replaced in another undefined data portion in the fixed form program so as to create the processing program.

3. An apparatus for creating a processing program used for a numerical control device, comprising:
fixed form program storage means for storing a plurality of fixed form programs including an undefined data portion and used to create said processing program;
formula storage means for storing a formula for determining program data used in said fixed form programs;
selection means for selecting one fixed form program from said fixed form program storage means; and
input means for inputting data to the undefined data portion included in the fixed form program selected by said selection means, wherein
the program data is determined with the formula stored by said formula storage means by using the data inputted to the undefined data portion included in said fixed form program by means of said input means, and is replaced in another undefined data portion in said fixed form program so as to create the processing program.

4. The apparatus for creating a processing program according to any one of claims 1 to 3, wherein symbols are provided within the fixed form program in order to identify the undefined data portion included in said fixed form program as the data to be inputted.
